# FASCICULE DE BREVET EUROPEEN

(11) **EP 3 976 476 B1**
(45) Date de publication et mention de la délivrance du brevet: **13.11.2024**
(21) Numéro de dépôt: 20724859.2
(22) Date de dépôt: 14.05.2020
(51) Int. Cl.: B64D 33/02, B64D 15/04

(54) **LÈVRE D'ENTRÉE D'AIR DE NACELLE DE TURBOMACHINE COMPRENANT UN DISPOSITIF ACOUSTIQUE ET PROCÉDÉ DE FABRICATION D'UNE TELLE LÈVRE**
LUFTEINLASSLIPPE EINER TURBINENTRIEBWERKSGONDEL UND HERSTELLUNGSVERFAHREN EINER SOLCHEN LIPPE
AIR INLET LIP FOR A NACELLE OF A TURBINE ENGINE COMPRISING AN ACOUSTIC DEVICE AND METHOD OF MANUFACTURING SUCH A LIP

(30) Priorité: 27.05.2019 FR 1905563
(43) Date de publication de la demande: 06.04.2022
(73) Titulaire: Safran Nacelles, 76700 Gonfreville-l'Orcher (FR)
(72) Inventeur: DIGEOS, Virginie, Emmanuelle, Anne-Marie, 77550 MOISSY-CRAMAYEL (FR); GONIDEC, Patrick, 77550 MOISSY-CRAMAYEL (FR)
(74) Mandataire: Argyma
(86) Numéro de dépôt international: PCT/EP2020/063536
(87) Numéro de publication internationale: WO 2020/239470

(56) Documents cités:
- US-A1- 2002 139 899
- US-A1- 2012 048 389
- US-A1- 2012 241 249

## Description

### DOMAINE TECHNIQUE DE L'INVENTION

La présente invention concerne le domaine des turbomachines d'aéronef et vise plus particulièrement une lèvre d'entrée d'air d'une nacelle d'une turbomachine d'aéronef.

De manière connue, un aéronef comporte une ou plusieurs turbomachines pour permettre sa propulsion par accélération d'un flux d'air qui circule d'amont en aval dans la turbomachine.

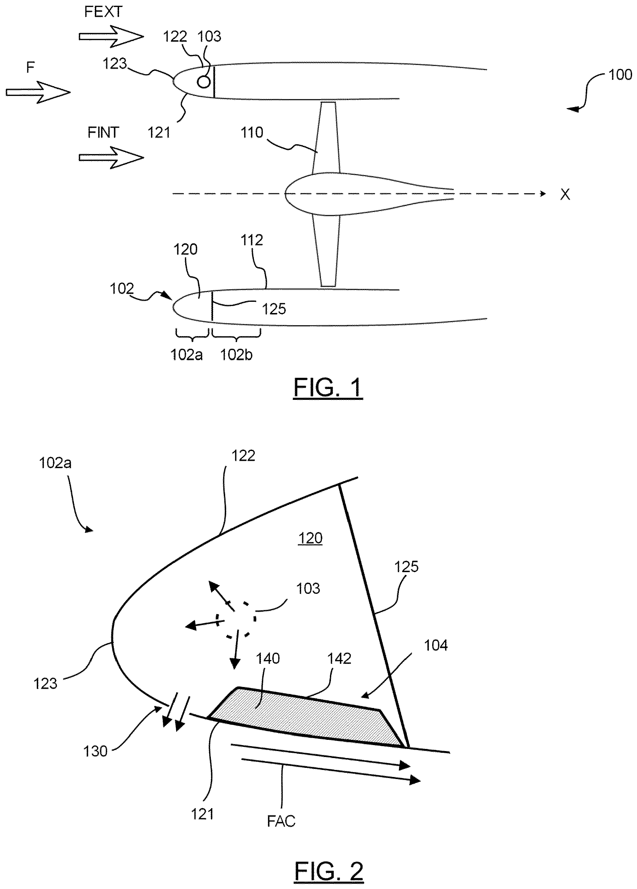

En référence à la figure 1, il est représenté une turbomachine 100 s'étendant selon un axe X et comportant une soufflante 110 montée rotative autour de l'axe X dans une nacelle comportant une virole intérieure 112 afin d'accélérer un flux d'air F d'amont vers l'aval. Par la suite, les termes amont et aval sont définis par rapport à la circulation du flux d'air F. La turbomachine 100 comporte à son extrémité amont une entrée d'air 102 qui permet de séparer le flux d'air entrant F en un flux d'air intérieur FINT qui est accéléré par la soufflante 110 et un flux d'air extérieur FEXT qui est guidé extérieurement à la nacelle.

En référence à la figure 1, l'entrée d'air 102 comporte une partie amont 102a, connue de l'homme du métier sous la désignation de lèvre 102a, et une partie aval 102b. Dans cet exemple, la lèvre 102a est séparée de la partie aval 102b par une cloison interne 125.

La lèvre 102a comporte une paroi intérieure 121 tournée vers l'axe X et une paroi extérieure 122 qui est opposée à la paroi intérieure 121, les parois 121, 122 sont reliées par une paroi amont 123 de manière à former une cavité annulaire 120. Ainsi, la lèvre 102a permet de séparer le flux d'air entrant F en un flux d'air intérieur FINT guidé par la paroi intérieure 121 et un flux d'air extérieur FEXT guidé par la paroi extérieure 122. Par la suite, les termes intérieur et extérieur sont définis radialement par rapport à l'axe X de la turbomachine 100.

La circulation d'air sur la paroi intérieure 121 de la lèvre 102a engendre des nuisances acoustiques et il a été proposé d'équiper la lèvre 102a avec un dispositif acoustique annulaire pour limiter ces nuisances.

En référence à la figure 2, on connait par la demande de brevet WO1216/005711 une lèvre 102a équipée d'un dispositif acoustique 104. Le dispositif acoustique 104 comporte une peau arrière 142 sur laquelle est fixé un matériau acoustique 140, en particulier, en nid d'abeille. En pratique, la peau arrière 142 est fixée au matériau acoustique 140 par brasage. Le dispositif acoustique 104 est positionné dans la cavité annulaire 120 sur la surface interne de la paroi intérieure 121 de la lèvre 102a.

Pour intégrer un tel dispositif acoustique 104, il est nécessaire de fixer la peau arrière 142 à la surface interne de la paroi intérieure 121 et de former des orifices (non représentés) dans la paroi intérieure 121 de manière à permettre une circulation du flux d'air intérieur FINT dans le dispositif acoustique 104 afin de limiter les nuisances acoustiques.

En pratique, la fixation de la peau arrière 142 du dispositif acoustique 104 à la surface interne de la paroi intérieure 121 de la lèvre 102a est réalisée par brasage au moyen d'un alliage du type 6061 qui est compatible avec la paroi intérieure 121 qui est généralement réalisée en aluminium pour résister aux températures de dégivrage.

Une telle étape de brasage diminue les caractéristiques mécaniques de la paroi intérieure 121. Aussi, il est nécessaire d'augmenter son épaisseur pour permettre une bonne tenue mécanique, ce qui augmente la masse de la lèvre 102a. Dans les faits, les tolérances géométriques de fabrication du dispositif acoustique 104 et de la lèvre 102a rendent complexes l'assemblage. En outre, lors du refroidissement suite au brasage, la paroi intérieure 121 est susceptible de se déformer. Par ailleurs, lors du brasage, la lèvre 102a doit être placée dans un four de brasage qui est susceptible d'entrainer un effondrement de la paroi extérieure 122 lors du chauffage. De plus, il est nécessaire de prévoir un outillage spécifique et complexe pour maintenir ensemble le dispositif acoustique 104 et la lèvre 102a lors du brasage. Enfin, l'usinage des orifices acoustiques dans la paroi intérieure 121 est complexe car ceux-ci doivent être alignés de manière précise avec des cellules du matériau acoustique 140 afin d'assurer un traitement acoustique optimal.

Un des objectifs de l'invention est de faciliter la fabrication d'une lèvre d'entrée d'air comportant un dispositif acoustique annulaire tout en ayant un coût de fabrication réduite.

Toujours en référence à la figure 2, il est connu d'équiper une lèvre 102a d'un système de dégivrage afin d'éviter l'accumulation de givre sur la paroi intérieure 121. A cet effet, il a été proposé de prévoir un injecteur d'air chaud 103 dans la cavité annulaire 120 et de former des ouvertures de soufflage 130 dans la paroi intérieure 121, de préférence, en amont du dispositif acoustique 104 afin de chauffer la paroi intérieure 121. L'usinage de telles ouvertures de soufflage 130 est long et complexe à réaliser.

Un autre objectif de l'invention est de faciliter la fabrication d'une lèvre d'entrée d'air comportant de telles ouvertures de soufflage.

De manière incidente, on connait dans l'art antérieur par la demande de brevet FR2924409 une nacelle d'aéronef comportant une entrée d'air, comportant un dispositif acoustique, et un corps aval comportant un autre dispositif acoustique. La demande de brevet FR2924409 ne présente aucune solution pour fabriquer une entrée d'air mais traite uniquement de l'assemblage à un corps aval de nacelle.

US2012048389A1 et US2012241249A1 enseignent une entrée d'air comportant un organe d'atténuation acoustique situé en aval de la lèvre d'entrée d'air, c'est-à-dire, en dehors de la cavité annulaire. US2002139899A1 enseigne une lèvre d'entrée d'air sans ouvertures de soufflage.

### PRESENTATION DE L'INVENTION

L'invention concerne une lèvre d'entrée d'air d'une nacelle de turbomachine d'aéronef selon la revendication 1.

Selon l'invention, la lèvre comporte deux modules rapportés qui sont assemblés ensemble. Une telle conception modulaire permet de faciliter le maintien et le traitement des modules étant donné que leur encombrement est limité et peut être réalisé avec des équipements plus simples et moins onéreux. En outre, le risque de défaut est limité car il est plus simple de contrôler les modules qui sont accessibles sur chacune de leurs faces. Un assemblage modulaire permet de recourir à diverses solutions d'assemblage sans affecter la santé des modules. De plus, les caractéristiques mécaniques de la paroi intérieure sont préservées et elle n'est plus susceptible de se déformer. La paroi extérieure est également préservée. Enfin, le deuxième module acoustique peut être simplement remplacé en cas de défaut.

De préférence, la peau avant comporte des perforations acoustiques. Cela permet de manière avantageuse de faire pénétrer le flux d'air intérieur dans le dispositif acoustique.

De manière préférée, le deuxième module comporte une peau arrière, le dispositif acoustique étant logé entre la peau avant et la peau arrière. Le dispositif acoustique est ainsi pris radialement en sandwich.

La paroi avant du premier module est radialement intérieure à la peau avant du deuxième module au niveau d'une zone d'interface entre la paroi avant et la peau avant. Cela permet avantageusement une liaison radiale dans la zone de superposition.

Une telle ouverture de soufflage permet de dégivrer la paroi intérieure de la lèvre.

De manière préférée, l'ouverture de soufflage est positionnée en amont du dispositif acoustique afin de permettre un dégivrage de la peau avant lors de la circulation du flux d'air intérieur.

La lèvre comprend au moins une ouverture de soufflage formée à l'interface entre la paroi avant du premier module et la peau avant du deuxième module. Une telle ouverture de soufflage permet avantageusement d'éviter d'usiner la paroi avant, ce qui améliore sa résistance mécanique. L'ouverture de soufflage est formée à l'interface lors de l'assemblage.

La paroi avant du premier module est écartée radialement de la peau avant du deuxième module de manière à former entre elles au moins une ouverture de soufflage. L'ouverture de soufflage comporte avantageusement un canal de guidage qui permet de guider précisément le flux d'air chaud de dégivrage.

De préférence, la lèvre comporte un organe de remplissage logé entre la paroi avant du premier module et la peau avant du deuxième module, c'est-à-dire, dans le canal de guidage de l'ouverture de soufflage.

La paroi avant du premier module est écartée radialement de la peau avant du deuxième module par au moins un plot d'écartement. Un tel plot d'écartement permet de définir l'épaisseur radiale de l'ouverture de soufflage. De préférence, le plot d'écartement possède une forme aérodynamique de manière à guider un flux d'air dans l'ouverture de soufflage.

Selon un aspect préféré, le plot d'écartement comporte une ouverture de guidage d'un organe de liaison mécanique configuré pour solidariser la paroi avant du premier module à la peau avant du deuxième module. De manière préférée, le plot d'écartement possède un profil aérodynamique de manière à guider de manière optimale le flux d'air de dégivrage. Il permet notamment d'éviter l'apparition de turbulences du fait des organes de liaison mécanique.

Selon un aspect, la lèvre comprend au moins une cloison interne montée entre le premier module et le deuxième module dans la cavité annulaire, de préférence, entre la surface interne de la paroi extérieure du premier module et la surface interne de la peau arrière du deuxième module. Le montage d'une telle cloison interne est facilité.

Selon un aspect, la cavité annulaire comporte au moins un injecteur d'un flux d'air chaud afin de permettre un dégivrage par soufflage via l'ouverture de soufflage.

L'invention concerne également une entrée d'air pour aéronef comprenant une lèvre telle que présentée précédemment. De préférence, l'entrée d'air comporte une partie amont, formée par la lèvre, et une partie aval sur laquelle est montée la lèvre.

L'invention concerne également une turbomachine pour aéronef comprenant une nacelle comprenant une entrée d'air telle que présentée précédemment

L'invention concerne aussi un procédé de fabrication d'une lèvre d'entrée d'air selon la revendication 5.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'une turbomachine comportant une nacelle avec une entrée d'air ;
La figure 2 est une représentation schématique en coupe longitudinale d'une entrée d'air comportant un dispositif acoustique selon l'art antérieur ;
La figure 3 est une représentation schématique en coupe longitudinale d'une étape de fabrication d'une entrée d'air selon l'art antérieur ;
La figure 4 est une représentation schématique en coupe longitudinale d'une lèvre comportant un premier module principal et un deuxième module acoustique assemblés ensemble ;
La figure 5 est une représentation schématique du deuxième module acoustique pour une lèvre selon l'invention ;
La figure 6 est une représentation schématique en perspective d'une lèvre selon l'invention avec une cloison interne de séparation ;
Les figures 7A et 7B sont des représentations schématiques en coupe longitudinale et en perspective partielle d'une première forme de réalisation d'un assemblage d'une lèvre comportant des ouvertures de soufflage ;
Les figures 8A et 8B sont des représentations schématiques en coupe longitudinale et en perspective partielle d'une deuxième forme de réalisation d'un assemblage d'une lèvre comportant des ouvertures de soufflage ;
La figure 8C est une représentation schématique en coupe longitudinale d'une extrémité aval du premier module principal selon un aspect de l'invention ;
La figure 9 est une représentation schématique en coupe longitudinale d'une troisième forme de réalisation d'un assemblage d'une lèvre comportant des ouvertures de soufflage ;
La figure 10 est une représentation schématique en perspective d'un assemblage d'une lèvre comportant des ouvertures de soufflage et un organe de remplissage ;
Les figures 11A et 11B sont des représentations schématiques en perspective partielle d'un assemblage d'une lèvre comportant des ouvertures de soufflage et des plots d'écartement profilés.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

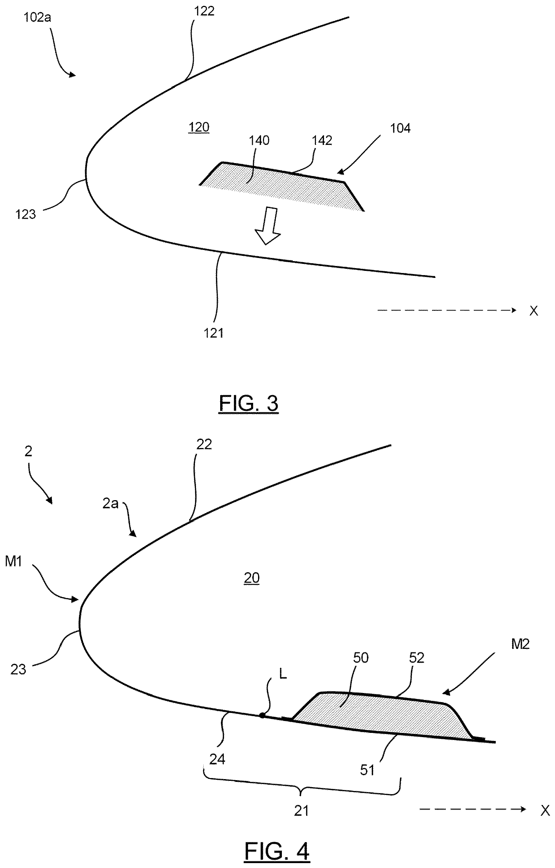

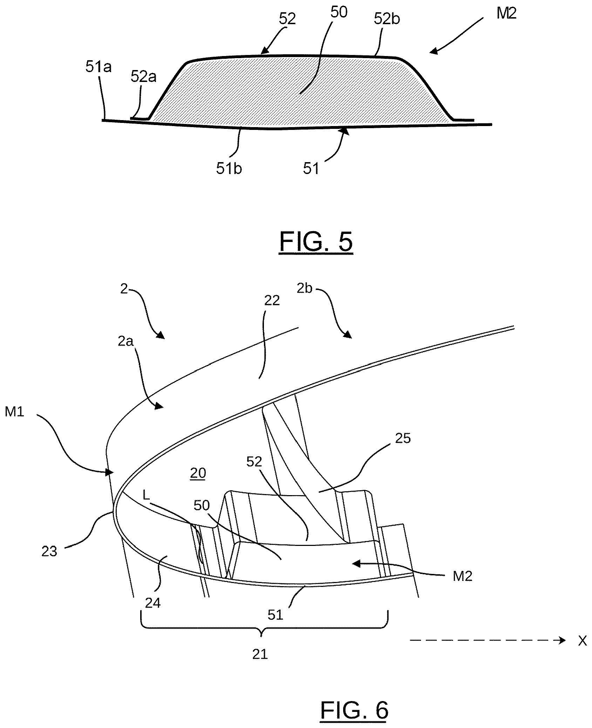

En référence à la figure 4, il est représenté une entrée d'air 2 d'une nacelle de turbomachine d'aéronef selon une forme de réalisation de l'invention, en particulier, une nacelle de turboréacteur. La turbomachine s'étend selon un axe X et permet la circulation, lors d'une poussée, d'un flux d'air d'amont vers l'aval. Par la suite, l'axe X est orienté de l'amont vers l'aval. En référence à la figure 6, l'entrée d'air 2 comporte une partie amont 2a, connue de l'homme du métier sous la désignation de lèvre 2a, et une partie aval 2b. Dans cet exemple, la lèvre 2a est séparée de la partie aval 2b par une cloison interne 25.

La lèvre 2a s'étend de manière annulaire autour de l'axe X et comporte une paroi intérieure 21 tournée vers l'axe X et une paroi extérieure 22 qui est opposée à la paroi intérieure 21. Les parois 21, 22 sont reliées par une paroi amont 23 de manière à délimiter une cavité annulaire 20. Ainsi, la lèvre 2a permet de séparer le flux d'air entrant en un flux d'air intérieur guidé par la paroi intérieure 21 et un flux d'air extérieur guidé par la paroi extérieure 22. Par la suite, les termes intérieur et extérieur sont définis radialement par rapport à l'axe X de la turbomachine. La lèvre 2a comporte un dispositif acoustique annulaire 50 monté dans la cavité annulaire 20.

Selon l'invention, la lèvre 2a comporte un premier module M1, comprenant la paroi extérieure 22, la paroi amont 23 et une paroi avant 24 qui forme une portion amont de la paroi intérieure 21. La lèvre 2a comporte en outre un deuxième module M2, comprenant le dispositif acoustique 50 et une peau avant 51 qui forme une portion aval de la paroi intérieure 21, le premier module M1 et le deuxième module M2 étant solidarisés ensemble de manière à ce que la paroi avant 24 et la peau avant 51 forment ensemble la paroi intérieure 21 de la lèvre 2a. De manière préférée, la paroi intérieure 21 possède une forme aérodynamique pour guider de manière optimale le flux d'air dans la veine secondaire de la turbomachine.

Autrement dit, contrairement à l'art antérieur qui enseignait de réaliser une paroi intérieure 21 monobloc, il est présenté une paroi intérieure 21 modulaire comportant une paroi avant 24, formant une partie amont, et une peau avant 51, formant une partie aval, qui sont solidarisées lors de l'assemblage. Comme cela sera présenté par la suite, une telle conception modulaire permet de former un deuxième module acoustique M2 de manière indépendante, ce qui permet de faciliter sa fabrication et de limiter le risque de défaut lors de l'assemblage.

Comme illustré à la figure 4, le premier module M1, désigné également module principal M1, possède une structure analogue à l'art antérieur à l'exception du fait qu'il ne possède par une paroi intérieure longue mais uniquement une paroi intérieure raccourcie appelée paroi avant 24. De manière préférée, le module principal M1 est réalisé en un matériau métallique, de préférence, résistant aux températures élevées, par exemple, en aluminium. Plusieurs formes de réalisation d'un module principal M1 seront présentées par la suite. Le premier module M1 est de préférence monobloc.

Dans cet exemple, le premier module M1 est réalisé par formage (par explosion ou autre) ou par fluotournage.

Comme illustré à la figure 4, le deuxième module M2, désigné également module acoustique M2, possède un dispositif acoustique 50 qui se présente, dans cet exemple, sous la forme d'une structure en nid d'abeille. Le dispositif acoustique 50 comporte une pluralité de cellules acoustiques, de préférence, métalliques. Néanmoins, il va de soi que le dispositif acoustique 50 pourrait se présenter sous d'autres formes.

En référence aux figures 4 et 5, le deuxième module M2 comporte une peau avant 51 et une peau arrière 52 entre lesquelles est monté le dispositif acoustique 50. La peau avant 51 du deuxième module acoustique M2 est configurée pour s'étendre dans le prolongement de la paroi avant 24 du premier module M1. La peau avant 51 est de préférence réalisée dans un matériau métallique, notamment, en aluminium.

La peau avant 51 comporte une pluralité de perforations de manière à mettre en communication le dispositif acoustique 50 avec le flux d'air circulant intérieurement à la lèvre 2a. Les perforations peuvent être réalisées avant ou après assemblage du deuxième module M2. De même, les perforations peuvent être réalisées avant ou après assemblage des modules M1, M2.

La peau arrière 52 définit une concavité dans laquelle est logé le dispositif acoustique 50. La peau arrière 52 est de préférence réalisée dans un matériau métallique, notamment, en aluminium. Le dispositif acoustique 50 est solidarisé à la peau arrière 52, de préférence, par brasage.

Comme illustré à la figure 5, en vue en coupe longitudinale, la peau arrière 52 comporte une portion centrale 52b concave et deux portions d'extrémité 52a qui sont solidarisées à la peau avant 51. Une telle solidarisation est simple à mettre en oeuvre étant donné qu'elle est réalisée indépendamment du premier module M1. De manière préférée, la peau arrière 52 est solidarisée à la peau avant 51 par brasage, soudage ou analogue ou par assemblage mécanique. De manière avantageuse, le deuxième module M2 possède un encombrement réduit, ce qui facilite son brasage et son assemblage dans un four. De plus, lors de la fabrication du deuxième module M2, les propriétés mécaniques du premier module M1 ne sont avantageusement pas affectées.

De manière préférée, les extrémités 51a de la peau avant 51 sont plus longues que celles de la peau arrière 52 de manière à être solidarisées au premier module M1 comme cela sera présenté par la suite.

Après assemblage, le deuxième module M2 peut être stocké, manipulé et utilisé de manière indépendante au premier module M1, ce qui simplifie de manière importante la logistique et l'assemblage de la lèvre 2a.

De manière avantageuse, le premier module M1 et le deuxième module M2 peuvent être obtenus par des méthodes différentes.

De manière avantageuse, les modules M1, M2 sont fabriqués de manière indépendante puis assemblés ensemble. L'assemblage est de préférence réalisé de manière mécanique, par soudage (laser, par friction, faisceau d'électrons, etc.) ou analogue.

En référence à la figure 6, selon un aspect de l'invention, l'entrée d'air 2 comporte une cloison interne 25 de manière à former une cavité annulaire 20 fermée dans laquelle peut notamment circuler un flux d'air de dégivrage. Dans cet exemple, la cloison interne 25 est montée entre la paroi extérieure 22 du premier module M1 et la peau arrière 52 du deuxième module M2. Une telle conception est avantageuse étant donné qu'elle permet, d'une part, de maximiser les dimensions du dispositif acoustique 50 et, d'autre part, de faciliter le montage de la cloison interne 25 qui peut être préalablement montée au premier module M1 ou au deuxième module M2. Néanmoins, il va de soi que le dispositif acoustique 50 pourrait être indépendant de la cloison interne 25 et écarté de cette dernière, en particulier, la cloison interne 25 pourrait être située en aval du dispositif acoustique 50.

Dans cet exemple, il a été présenté l'assemblage d'une cloison interne 25 dans l'entrée d'air 2. Une telle cloison interne 25 n'est pas nécessaire et peut être omise en fonction des configurations de l'entrée d'air 2. Par la suite, pour des raisons de clarté et de concision, une telle cloison interne 25 n'est pas représentée mais il va de soi qu'elle pourrait être prévue.

Comme indiqué précédemment, l'entrée d'air 2 comporte une partie amont 2a et une partie aval 2b. Suite à sa fabrication, la lèvre 2a peut être montée à une partie aval 2b afin de former l'entrée d'air 2. De manière préférée, la partie aval 2b comporte un dispositif acoustique. Selon un aspect de l'invention, le dispositif acoustique de la partie aval 2b est indépendant du dispositif acoustique 50 de la lèvre 2a. Selon un autre aspect de l'invention, le dispositif acoustique s'étend de manière continue entre la partie aval 2b et la lèvre 2a afin de permettre une atténuation acoustique optimale. Il a été présenté une cloison interne 25 entre la lèvre 2a et la partie aval 2b de l'entrée d'air 2 mais celle-ci est optionnelle.

Selon un aspect de l'invention, la cavité annulaire 20 comporte au moins un injecteur d'un flux d'air chaud, en particulier, pour le dégivrage de la lèvre 2a. Selon un aspect de l'invention, la lèvre 2a comporte au moins une ouverture de soufflage dans la paroi intérieure 21, de préférence, une pluralité d'ouvertures de soufflage afin de guider le flux d'air chaud en dehors de la cavité annulaire 20 et ainsi dégivrer la paroi intérieure 21.

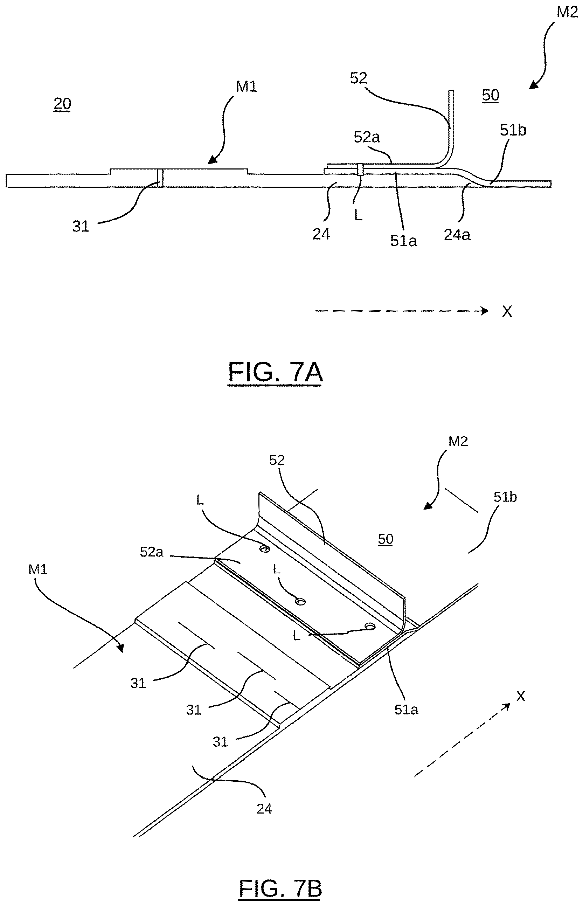

Plusieurs formes de réalisation d'ouvertures de soufflage vont être dorénavant présentées en référence aux figures 7A à 11B.

Comme illustré aux figures 7A et 7B, selon une première forme de réalisation, le premier module M1 et le deuxième M2 sont solidarisés ensemble au niveau d'une zone d'interface dans laquelle une extrémité 51a de la peau avant 51 du deuxième module M2 est solidarisée à la paroi avant 24 du premier module M1. De manière préférée, dans la zone d'interface, la peau avant 51 est radialement intérieure à la paroi avant 24 du premier module M1 de manière à permettre une solidarisation selon une direction radiale, par exemple, par soudage ou liaison mécanique. Dans cette forme de réalisation, trois liaisons L sont représentées à la figure 7B.

Afin de former une lèvre 2a ayant une paroi intérieure 21 ayant une courbure aérodynamique, la peau avant 51 du deuxième module M2 est incurvée de manière à comprendre une portion d'extrémité 51a superposée à la paroi avant 24 du premier module M1 pour permettre une fixation et une portion centrale 51b dans le prolongement de la paroi avant 24 du premier module M1 comme illustré à la figure 7A.

De manière préférée, comme illustré à la figure 7A, l'extrémité aval 24a de la paroi avant 24 est biseautée de manière à épouser la courbure de la peau avant 51 du deuxième module M2, sa surface radialement extérieure étant convergente radialement vers l'intérieur selon une direction de l'amont vers l'aval. Un tel biseau est simple à réaliser et évite une déformation importante de la peau avant 51 afin de conserver un profil aérodynamique. Le biseau fait ainsi face à une courbure de la peau avant 51 afin d'obtenir une paroi intérieure 21 continue.

Comme illustré aux figures 7A et 7B, la paroi avant 24 du premier module M1 comporte une pluralité d'ouvertures de soufflage 31 qui sont formées à distance de l'extrémité aval de la paroi avant 24. Dans cet exemple, les ouvertures de soufflage 31 s'étendent sensiblement radialement dans la matière de la paroi avant 24. Une telle ouverture de soufflage indépendante 31 est connue de l'homme du métier sous sa désignation anglaise « separated slot ». En référence à la figure 7B, chaque ouverture de soufflage 31 se présente dans cet exemple sous la forme d'une fente de direction azimutale. Il va de soi que la forme et la direction pourraient être différentes.

Les ouvertures de soufflage 31 sont formées dans le premier module M1 de manière indépendante au deuxième module M2. En référence à la figure 7A, les ouvertures de soufflage 31 sont formées dans une surépaisseur de la paroi avant 24, une telle surépaisseur n'étant néanmoins pas nécessaire.

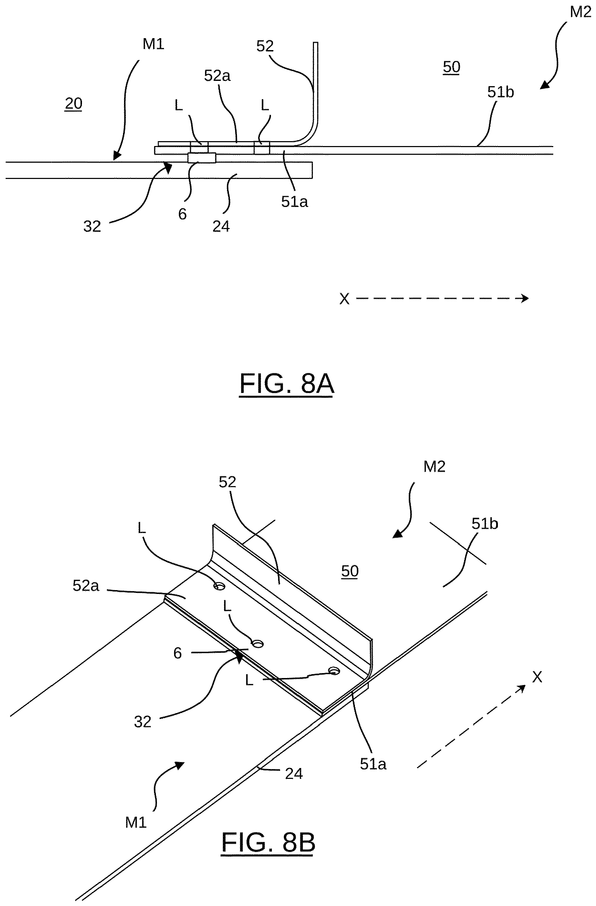

Selon une deuxième forme de réalisation, comme illustré aux figures 8A et 8B, le premier module M1 et le deuxième M2 sont solidarisés ensemble au niveau d'une zone d'interface dans laquelle l'extrémité 51a de la peau avant 51 du deuxième module M2 est solidarisée à la paroi avant 24 du premier module M1. De manière préférée, dans la zone d'interface, la peau avant 51 est radialement intérieure à la paroi avant 24 du premier module M1 de manière à permettre une solidarisation selon une direction radiale.

Dans cette deuxième forme de réalisation, la paroi avant 24 et la peau avant 51 sont écartées radialement par une pluralité de plots d'écartement 6, ou cales, montés entre la paroi avant 24 et la peau avant 51. De manière préférée, au moins un plot d'écartement 6 comporte une ouverture de passage radiale pour guider un organe de liaison mécanique L, par exemple, un rivet. Ainsi, lors de l'assemblage du premier module M1 avec le deuxième module M2, la paroi avant 24 et la peau avant 51 sont écartées de manière à former entre elles une ouverture de soufflage d'air 32 comportant un canal de guidage, de préférence, de forme annulaire. De manière préférée, un plot d'écartement 6 possède une épaisseur radiale comprise entre 1 mm et 8 mm afin de former un canal de guidage d'épaisseur calibrée. De préférence, l'épaisseur radiale dépend des conditions de dégivrage souhaitées (température, pression, etc.)

De manière avantageuse, contrairement à la première forme de réalisation, il n'est aucunement nécessaire de percer la paroi avant 24 du premier module M1, l'ouverture de soufflage 32 est ici formée au niveau de la zone d'interface lors de l'assemblage. Les contraintes mécaniques dans la paroi avant 24 du premier module M1 sont alors limitées. Une telle ouverture de soufflage décalée 32 est connue de l'homme du métier sous sa désignation anglaise « step down slot ». Dans cet exemple, l'ouverture de soufflage 32 est circonférentielle.

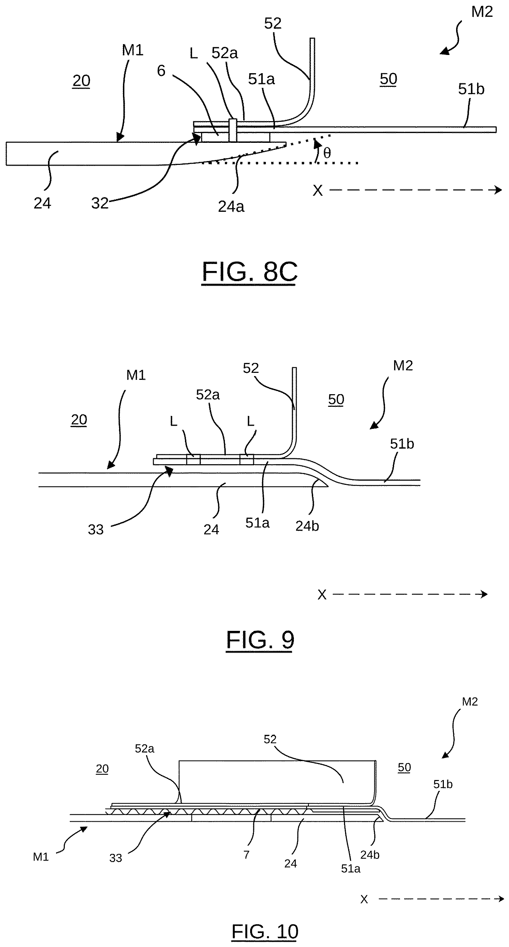

En référence à la figure 8A, la paroi intérieure 21 de la lèvre 2a comporte une discontinuité radiale du fait de l'écartement entre la paroi avant 24 et la peau avant 51. De manière alternative, en référence à la figure 8C, l'extrémité aval 24a de la paroi avant 24 est biseauté, sa surface radialement intérieure étant convergente radialement vers l'extérieur selon une direction de l'amont vers l'aval. Un tel biseau est simple à réaliser et limite de manière importante les discontinuités aérodynamiques à l'interface entre la paroi avant 24 et la peau avant 51. De bonnes performances sont obtenues pour un angle de biseau θ inférieure à 15° comme illustré à la figure 8C. De préférence, la surface radialement intérieure est incurvée pour former un profil aérodynamique.

Selon une troisième forme de réalisation, comme illustré à la figure 9, la peau avant 51 du deuxième module M2 est incurvée de manière à comprendre une portion d'extrémité 51a en regard de la paroi avant 24 du premier module M1 pour permettre une fixation radiale et une portion centrale 51b dans le prolongement de la paroi avant 24 du premier module M1.

Dans cette forme de réalisation, la paroi avant 24 et la peau avant 51 possèdent sensiblement la même forme que dans la première forme de réalisation mais sont écartées radialement de manière analogue à la deuxième forme de réalisation, en particulier, par des plots d'écartement 6 (non représentés sur la figure 9) et se présente sous la forme d'une fente annulaire.

De manière avantageuse, une ouverture de soufflage 33 est ici formée au niveau de la zone d'interface lors de l'assemblage. L'ouverture de soufflage 33 comporte un canal de guidage s'étendant longitudinalement entre la paroi avant 24 et la peau avant 51 de manière à guider le flux d'air chaud. L'ouverture de soufflage 33 débouche à l'interface entre la paroi avant 24 et la peau avant 51 qui sont alignées. Une telle ouverture de soufflage enterrée 33 est connue de l'homme du métier sous sa désignation anglaise « burried slot ». Dans cet exemple, l'ouverture de soufflage 33 est circonférentielle.

Selon une variante de l'invention, en référence à la figure 10, lorsque l'ouverture de soufflage 32, 33 comporte un canal de guidage formé entre la paroi avant 24 et la peau avant 51, un organe de remplissage 7 peut être avantageusement prévu dans le canal de guidage de manière à agir sur le flux d'air chaud avant son évacuation.

De manière préférée, l'organe de remplissage 7 peut comprendre des canaux élémentaires afin de séparer le flux d'air chaud en une pluralité de flux élémentaires de manière à favoriser le guidage et permettre un dégivrage optimal. A titre d'exemple, l'organe de remplissage 7 comporte un panneau ondulé pris en sandwich entre deux panneaux circonférentiels. De préférence encore, l'organe de remplissage 7 est en matériau métallique.

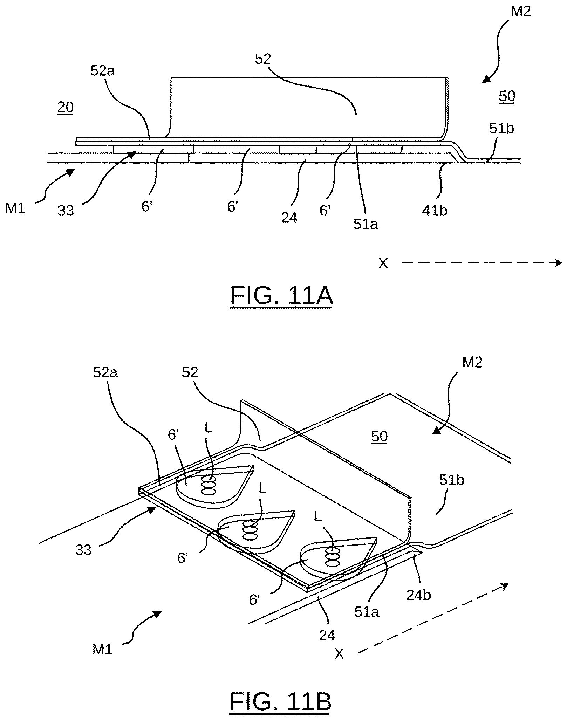

Selon une variante de l'invention, en référence aux figures 11A et 11B, la lèvre 2a comporte des plots d'écartement 6' ayant un profil aérodynamique de manière à définir un bord d'attaque orienté vers l'amont et un bord de fuite orienté vers l'aval. De manière préférée, un plot d'écartement 6' possède une forme de goutte d'eau comme illustré aux figures 11A et 11B dont la section augmente puis diminue de l'amont vers l'aval. Il va néanmoins de soi que chaque organe d'écartement pourrait posséder une forme différente.

Les plots d'écartement 6, 6' (de profil aérodynamique ou non aérodynamique) peuvent être montés de manière rapportée entre la paroi avant 24 et la peau avant 51 mais peuvent également être issus de matière de la paroi avant 24 ou de la peau avant 51. De manière préférée, les plots d'écartement 6, 6' sont issus de matière de la paroi avant 24 et formés lors de la réalisation du premier module M1.

Grâce à l'invention, une conception modulaire permet de faciliter le maintien et le traitement des modules M1, M2 étant donné que leur encombrement est limité et peut être réalisé avec des équipements plus simples et moins onéreux. En outre, le risque de défaut est limité car les modules M1, M2 sont accessibles sur chacune de leurs faces, ce qui facilite leur contrôle. De plus, un assemblage modulaire permet de recourir à diverses solutions d'assemblage sans affecter la santé des modules M1, M2.

En particulier, grâce à l'invention, les caractéristiques mécaniques de la paroi intérieure 21 sont préservées et elle n'est plus susceptible de se déformer. La paroi extérieure 22 est également préservée étant donné qu'elle n'est plus introduite dans un four de brasage. Enfin, le deuxième module acoustique M2 peut être simplement remplacé en cas de défaut.

## Revendications

1. Lèvre (2a) d'entrée d'air (2) d'une nacelle de turbomachine d'aéronef s'étendant selon un axe X dans lequel circule un flux d'air d'amont vers l'aval, la lèvre (2a) s'étendant de manière annulaire autour de l'axe X et comportant une paroi intérieure (21) tournée vers l'axe X et une paroi extérieure (22) qui est opposée à la paroi intérieure (21), la paroi intérieure (21) et la paroi extérieure (22) étant reliées par une paroi amont (23) de manière à délimiter une cavité annulaire (20), la lèvre (2a) comportant un dispositif acoustique annulaire (50) monté dans la cavité annulaire (20), ladite **lèvre (2a)** comportant :
- un premier module (M1), comprenant la paroi extérieure (22), la paroi amont (23) et une paroi avant (24) formant une portion amont de la paroi intérieure (21) et
- un deuxième module (M2), comprenant le dispositif acoustique (50) et une peau avant (51) formant une portion aval de la paroi intérieure (21), le premier module (M1) et le deuxième module (M2) étant solidarisés ensemble de manière à ce que la paroi avant (24) et la peau avant (51) forment ensemble la paroi intérieure (21) de la lèvre (2a), la paroi avant (24) du premier module (M1) étant écartée radialement de la peau avant (51) du deuxième module (M2) par au moins un plot d'écartement (6, 6') de manière à former entre elles au moins une ouverture de soufflage (32, 33), la lèvre (2a) étant **caractérisée par le fait que** la paroi avant (24) du premier module (M1) est radialement intérieure à la peau avant (51) du deuxième module (M2) au niveau d'une zone d'interface entre la paroi avant (24) et la peau avant (51).

2. Lèvre (2a) d'entrée d'air (2) selon la revendication 1, dans laquelle le deuxième module (M2) comporte une peau arrière (52), le dispositif acoustique (50) étant logé entre la peau avant (51) et la peau arrière (52).

3. Lèvre (2a) d'entrée d'air (2) selon l'une des revendications 1 à 2, dans laquelle le plot d'écartement (6') possède une forme aérodynamique de manière à guider un flux d'air dans l'ouverture de soufflage (33).

4. Lèvre (2a) d'entrée d'air (2) selon l'une des revendications 1 à 3, dans laquelle le plot d'écartement (6, 6') comporte une ouverture de guidage d'un organe de liaison mécanique (L) configuré pour solidariser la paroi avant (24) du premier module (M1) à la peau avant (51) du deuxième module (M2).

5. Procédé de fabrication d'une lèvre (2a) d'entrée d'air (2) selon l'une des revendications 1 à 4, comprenant une étape de fabrication indépendante du premier module (M1) et du deuxième module (M2) et une étape de solidarisation du premier module (M1) et du deuxième module (M2) de manière à ce que la paroi avant (24) et la peau avant (51) forment ensemble la paroi intérieure (21) de la lèvre (2a).

## Patentansprüche

1. Lippe (2a) eines Lufteinlasses (2) einer Flugzeugtriebwerksgondel, die sich entlang einer Achse X erstreckt, in der ein Luftstrom von stromaufwärts nach stromabwärts zirkuliert, wobei sich die Lippe (2a) ringförmig um die Achse X erstreckt und eine innere Wand (21), die der Achse X zugewandt ist, und eine äußere Wand (22), die der inneren Wand (21) gegenüberliegt, wobei die innere Wand (21) und die äußere Wand (22) durch eine stromaufwärts liegende Wand (23) verbunden sind, um einen ringförmigen Hohlraum (20) zu definieren, wobei die Lippe (2a) eine ringförmige akustische Vorrichtung (50) umfasst, die in dem ringförmigen Hohlraum (20) angebracht ist, wobei die Lippe (2a) Folgendes umfasst:
- ein erstes Modul (M1), das die Außenwand (22), die stromaufwärts liegende Wand (23) und eine Vorderwand (24) umfasst, die einen stromaufwärts liegenden Teil der Innenwand (21) bildet, und
- ein zweites Modul (M2), das die akustische Vorrichtung (50) und eine einen stromabwärts liegenden Abschnitt der Innenwand (21) bildende Vorderhaut (51) aufweist, wobei das erste Modul (M1) und das zweite Modul (M2) so aneinander befestigt sind, dass die Vorderwand (24) und die Vorderhaut (51) zusammen die Innenwand (21) der Lippe (2a) bilden, wobei die Vorderwand (24) des ersten Moduls (M1) von der Vorderhaut (51) des zweiten Moduls (M2) durch mindestens eine Abstandsnase (6, 6') radial getrennt ist, um dazwischen mindestens eine Ausblasöffnung (32, 33) zu bilden, wobei die Lippe (2a) **dadurch gekennzeichnet ist, dass** die Vorderwand (24) des ersten Moduls (M1) in einem Grenzbereich zwischen der Vorderwand (24) und der Vorderhaut (51) radial innen zur Vorderhaut (51) des zweiten Moduls (M2) liegt.

2. Lufteinlasslippe (2a) des Lufteinlasses (2) nach Anspruch 1, wobei das zweite Modul (M2) eine Rückwand (52) umfasst, wobei die akustische Vorrichtung (50) zwischen der Vorderwand (51) und der Rückwand (52) untergebracht ist.

3. Lufteinlasslippe (2a) des Lufteinlasses (2) nach einem der Ansprüche 1 bis 2, wobei die Abstandsnase (6') eine aerodynamische Form aufweist, um einen Luftstrom in die Einblasöffnung (33) zu leiten.

4. Lufteinlasslippe (2a) des Lufteinlasses (2) nach einem der Ansprüche 1 bis 3, wobei die Abstandsnase (6, 6') eine Führungsöffnung für ein mechanisches Verbindungselement (L) aufweist, das zur Befestigung der Stirnwand (24) des ersten Moduls (M1) an der Vorderhaut (51) des zweiten Moduls (M2) ausgebildet ist.

5. Verfahren zur Herstellung einer Lufteinlasslippe (2a) eines Lufteinlasses (2) nach einem der Ansprüche 1 bis 4, umfassend einen Schritt der unabhängigen Herstellung des ersten Moduls (M1) und des zweiten Moduls (M2) und einen Schritt der Befestigung des ersten Moduls (M1) und des zweiten Moduls (M2), so dass die Vorderwand (24) und die Vorderhaut (51) zusammen die Innenwand (21) der Lippe (2a) bilden.

## Claims

1. A lip (2a) of an air intake (2a) of an aircraft turbomachine nacelle extending along an axis X in which an air flow circulates from upstream to downstream, the lip (2a) annularly extending about axis X and comprising an internal wall (21) pointing to axis X and an external wall (22) which is opposite to the internal wall (21), the internal wall (21) and the external wall (22) being connected through an upstream wall (23) so as to delimit an annular cavity (20), the lip (2a) comprising an annular acoustic device (50) mounted in the annular cavity (20), this lip comprising :
- a first module (M1), comprising the external wall (22), the upstream wall (23) and a front wall (24) forming an upstream portion of the internal wall (21) and
- a second module (M2), comprising the acoustic device (50) and a front skin (51) forming a downstream portion of the internal wall (21), the first module (M1) and the second module (M2) being secured together so that the front wall (24) and the front skin (51) together form the internal wall (21) of the lip (2a), the front wall (24) of the first module (M1) being spaced radially from the front skin (51) of the second module (M2) by at least one spacer stud (6, 6') so as to form between them at least one blow-out opening (32, 33) which lip (2a) is **characterized in that** the front wall (24) of the first module (M1) is radially internal from the front skin (51) of the second module (M2) at an interface zone between the front wall (24) and the front skin (51).

2. The lip (2a) of an air intake (2) according to claim 1, wherein the second module (M2) comprises a rear skin (52), the acoustic device (50) being housed between the front skin (51) and the rear skin (52).

3. The lip (2a) of an air intake (2) according to one of claims 1 to 2, wherein the spacer stud (6') has an aerodynamic shape so as to guide an air flow into the blow-out opening (33).

4. The lip (2a) of an air intake (2) according to one of claims 1 to 3, wherein the spacer stud (6, 6') comprises an opening for guiding a mechanical connection member (L) configured to secure the front wall (24) of the first module (M1) to the front skin (51) of the second module (M2).

5. A method for manufacturing a lip (2a) of an air intake (2) according to one of claims 1 to 4, comprising a step of independently manufacturing the first module (M1) and the second module (M2), and a step of securing the first module (M1) to the second module (M2) so that the front wall (24) and the front skin (51) together form the internal wall (21) of the lip (2a).
